# DEMANDE DE BREVET EUROPEEN

(11) **EP 1 355 284 A1**
(43) Date de publication de la demande: **22.10.2003**
(21) Numéro de dépôt: 03356067.3
(22) Date de dépôt: 18.04.2003
(51) Int. Cl.: G08G 1/14, G07F 17/24, G07C 1/30

(54) **Système de réservation d'un emplacement de stationnement pour un véhicule**

(30) Priorité: 19.04.2002 FR 0204953
(71) Demandeur: SEMCO, 38110 La Tour du Pin (FR)
(72) Inventeur: Descombes, Pierre, 38110 Cessieu (FR)
(74) Mandataire: Maureau, Philippe

(57) **Abrégé**

Ce système comprend :
- un détecteur de la présence d'un véhicule sur l'emplacement de stationnement (2) à réserver ;
- un panneau indicateur (5) ;
- un système de gestion programmable (6), relié au détecteur et au panneau indicateur (5), grâce auquel des plages horaires de stationnement autorisé et des plages horaires de stationnement non autorisé peuvent être programmées, et grâce auquel des informations correspondantes peuvent être affichées sur ledit panneau indicateur (5) ;
- des moyens d'alarme (21, 31), reliés au système de gestion (6) et commandés par celui-ci, et
- des moyens (24, 35) d'autorisation, par lequel un utilisateur habilité peut agir sur le système de gestion (6).

Système notamment destiné à permettre de réserver un emplacement de stationnement à un véhicule de transport de fonds devant une banque.

## Description

La présente invention concerne un système de réservation d'un ou plusieurs emplacements de stationnement pour un véhicule. Ce système est notamment destiné à permettre de réserver un ou plusieurs emplacements de stationnement à un véhicule de transport de fonds devant une banque.

La sécurité des transports de fonds ou de valeurs commande que le véhicule de transport puisse se garer et stationner le plus près possible d'une banque.

Pour réserver un emplacement de stationnement à un tel véhicule, il est connu de disposer un panneau de stationnement interdit au niveau de l'emplacement et de marquer l'emplacement sur le sol, devant la banque, au moyen de peinture blanche. Une croix sur l'emplacement vient signaler aux automobilistes qu'il s'agit d'un emplacement réservé.

Ce moyen de réservation n'est pas très efficace et il est fréquent qu'un véhicule non autorisé stationne sur l'emplacement réservé.

Pour la municipalité, ce moyen de réservation a également pour inconvénient de supprimer une place de stationnement payant, ce qui, outre la raréfaction d'emplacements de stationnement en ville, conduit à un manque à gagner non négligeable en termes de redevances de stationnement.

Des plots rétractables dans le sol peuvent également être utilisés pour réserver de tels emplacements de stationnement. Ils présentent toutefois les mêmes inconvénients que ceux indiqués ci-dessus avec en plus un coût de mise en oeuvre très important.

La présente invention vise précisément à remédier à ces inconvénients.

À cet effet, le système qu'elle concerne comprend :
- un détecteur de la présence d'un véhicule sur l'emplacement de stationnement à réserver ;
- un panneau indicateur visible par le conducteur d'un véhicule stationnant sur ledit emplacement, comprenant un moyen d'affichage d'informations ;
- un système de gestion programmable, relié au détecteur et au panneau indicateur, grâce auquel des plages horaires de stationnement autorisé et des plages horaires de stationnement non autorisé peuvent être programmées, et grâce auquel des informations correspondantes peuvent être affichées sur ledit panneau indicateur par ledit moyen d'affichage d'informations ;
- des moyens d'alarme, reliés au système de gestion et commandés par celui-ci, et
- des moyens d'autorisation, par lequel un utilisateur habilité peut agir sur le système de gestion pour autoriser temporairement le stationnement d'un véhicule autorisé dans une plage horaire non autorisée, permettant, au départ de ce véhicule, de rendre le stationnement autorisé dans une plage horaire jusque là non autorisée aux utilisateurs non habilités.

Le stationnement est en principe interdit sur l'emplacement à réserver pendant une période de temps déterminée, correspondant à celle durant laquelle il est nécessaire de réserver ledit emplacement. Dans le cas de transport de fonds, il s'agit de la période de temps durant laquelle des fonds ou des valeurs peuvent être transportés, par exemple une semaine allant du dimanche à 22h30 au samedi à 13h30.

Lorsqu'il n'y a pas lieu de réserver l'emplacement sur une plage horaire déterminée, en particulier sur une demi-journée pendant laquelle aucun transport de fonds n'est programmé, une personne habilitée, en particulier une personne travaillant dans la banque concernée, peut agir sur le système de gestion pour autoriser le stationnement sur l'emplacement sur cette plage horaire. Le moyen d'affichage d'informations indique alors que le stationnement est autorisé.

Lorsqu'il y a lieu de réserver l'emplacement sur une plage horaire déterminée, en particulier lorsque qu'un transport de fonds est programmé sur une demi-journée donnée, une personne habilitée peut agir sur le système de gestion pour interdire le stationnement sur l'emplacement sur cette plage horaire. Le moyen d'affichage d'informations indique alors que le stationnement est interdit sur l'emplacement.

Lorsqu'un véhicule autorisé vient stationner sur cet emplacement, un utilisateur habilité agit sur les moyens d'autorisation pour afficher sur le moyen d'affichage d'informations que le stationnement est autorisé et inactiver lesdits moyens d'alarme, autorisant ainsi le stationnement du véhicule. Quand ce dernier quitte l'emplacement, soit le stationnement reste autorisé s'il n'y a plus lieu de réserver l'emplacement, soit une personne habilitée agit à nouveau sur lesdits moyens d'autorisation pour réactiver lesdits moyens d'alarme et interdire ainsi le stationnement des véhicules non autorisés, soit cette réactivation est automatique.

Si un véhicule non autorisé vient à stationner sur cet emplacement dans une plage de stationnement non autorisé, ledit détecteur détecte la présence de ce véhicule et le système de gestion actionne les moyens d'alarme. Il est ainsi signalé à l'automobiliste qu'il est en train de se garer sur un emplacement réservé et/ou à la banque, ainsi que, le cas échéant, aux autorités compétentes, qu'un stationnement non autorisé est en train de se faire

Le système selon l'invention permet par conséquent de réserver efficacement un ou plusieurs emplacements de stationnement à un véhicule autorisé, en particulier un véhicule de transport de fonds devant une banque, sans supprimer la possibilité de stationnement sur l'emplacement par d'autres véhicules en dehors des plages horaires dans lesquels l'emplacement doit être réservé. Le transport de fonds ou de valeurs est rendu beaucoup plus sûr étant donné que le véhicule de transport peut se garer au plus près de l'entrée de la banque, et ce, sans suppression d'une place de stationnement systématique devant une banque.

Avantageusement, le système de gestion comprend des moyens logiciels permettant de déterminer de manière aléatoire les heures de début des plages horaires de stationnement autorisé, et de manière fixe les heures de début des plages horaires de stationnement non autorisé.

Ces heures de début ne sont donc pas fixes, de sorte que les automobilistes ne peuvent ainsi pas s'habituer à des horaires fixes et ne peuvent donc pas anticiper le début d'une plage horaire de stationnement autorisé.

Pour sa bonne compréhension, l'invention est à nouveau décrite ci-dessous en référence au dessin schématique annexé représentant, à titre d'exemple non limitatif, une forme de réalisation préférée du système de réservation qu'elle concerne.

La figure 1 en est une vue schématique, de dessus, et

la figure 2 est une vue en perspective d'un panneau indicateur qu'il comprend.

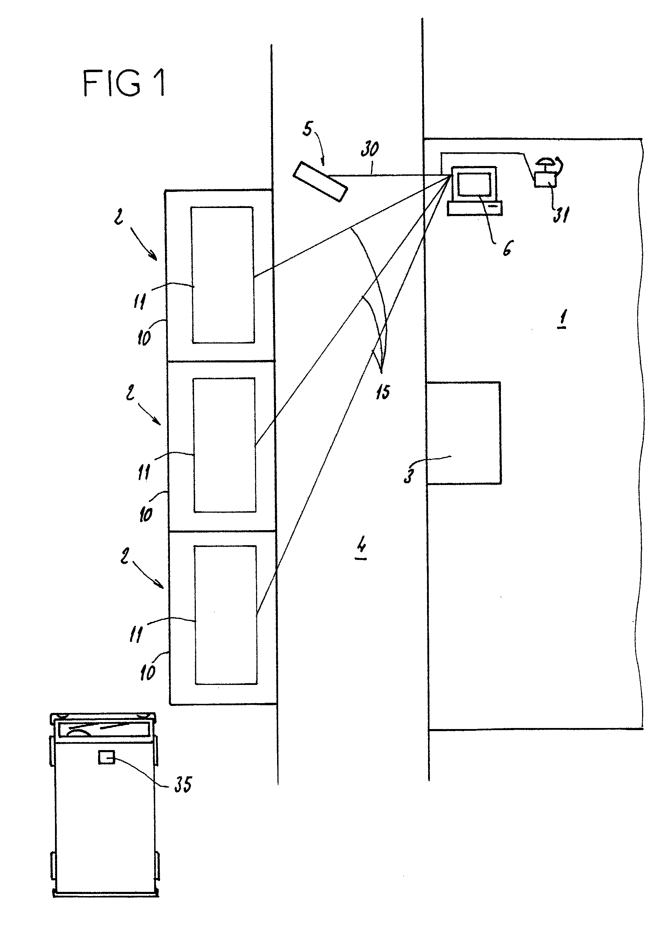

La figure 1 représente un bâtiment 1 dans lequel est installée une banque, trois emplacements de stationnement 2 situés en regard de l'entrée 3 de cette banque, le long d'un trottoir 4, un panneau indicateur 5 et un système de gestion 6 placé dans la banque.

Chaque emplacement de stationnement 2 est délimité par un marquage au sol 10. Ce marquage 10 peut être classique, c'est-à-dire fait au moyen de peinture blanche, ou peut être spécifique afin d'attirer l'attention d'un automobiliste sur le fait qu'il s'agit d'emplacements particuliers, susceptibles d'être réservés. Dans ce cas, le marquage 10 peut par exemple être réalisé sous forme de points consécutifs.

Chaque emplacement 2 est équipé d'un détecteur de la présence d'un véhicule sur lui. Ce détecteur peut notamment inclure un capteur à pression 11 noyé dans le substrat de la chaussée.

Les détecteurs sont connectés au système de gestion 6 par des câbles électriques 15.

Le panneau indicateur 5 est fixé au trottoir 4 légèrement en avant du premier emplacement 2 et est disposé de biais de manière à pouvoir être visible des trois emplacements 2.

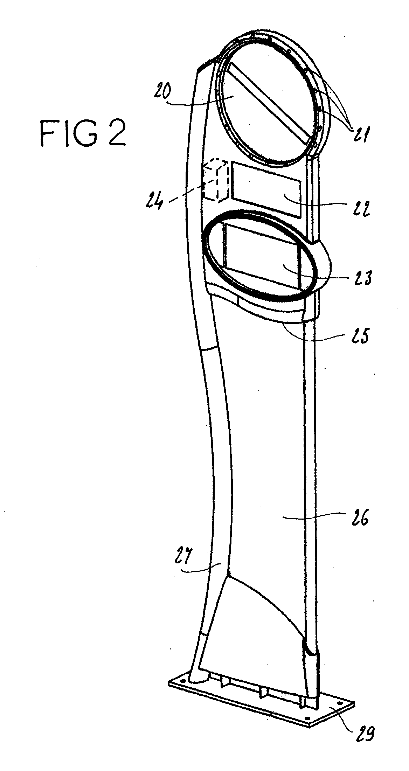

Comme le montre la figure 2, le panneau 5 comprend, de haut en bas, un panneau réglementaire 20 de stationnement interdit, entouré de diodes électroluminescentes 21, un emplacement 22 d'affichage d'informations réglementaires, un écran électronique 23 d'affichage d'informations, un récepteur 24 d'ondes radio, non visible de l'extérieur, et une coque d'habillage 25, incluant un vitrage translucide inférieur 26. L'ensemble est porté par une structure métallique incluant un mât 27 en aluminium et une embase 29 d'ancrage au sol.

Les appareils électriques 21, 23, 24 du panneau 5 sont reliées au système de gestion 6 par des câbles électriques 30 et sont commandés par ce système de gestion 6.

Ce dernier comprend essentiellement un ordinateur ou similaire et un logiciel de gestion, permettant de programmer des plages horaires de stationnement autorisé et des plages horaires de stationnement non autorisé.

Le système de réservation comprend également une alarme 31 située dans la banque, reliée au système de gestion 6, et au moins une télécommande 35 à ondes radio apte à coopérer avec le récepteur 24 du panneau 5 pour agir sur le système de gestion 6. Chaque télécommande 35 est détenue par une personne habilitée à l'intérieur d'un véhicule de transport de fonds ou de valeurs autorisé à se garer sur un ou plusieurs emplacements 2.

En pratique, le stationnement est en principe interdit sur les emplacements 2 pendant la période de temps durant laquelle des fonds ou des valeurs peuvent être transportés, par exemple une semaine allant du dimanche à 22h30 au samedi à 13h30.

Lorsqu'aucun transport de fonds n'est programmé sur une demi-journée déterminée, le système de gestion 6 autorise le stationnement de véhicules sur un ou plusieurs des emplacements 2 en fonction d'horaires dont le début est déterminé de manière aléatoire. L'écran 23, commandé par ce système 6, indique alors que le stationnement est autorisé sur cet ou ces emplacements, en rappelant l'heure de fin d'autorisation.

Lorsque qu'un transport de fonds est programmé sur une demi-journée donnée, une personne habilitée de la banque agit sur le système de gestion 6 au moins au cours de la demi-journée qui précède, pour interdire le stationnement sur un ou plusieurs emplacements 2. Au moment où le véhicule de transport de fonds vient stationner sur cet emplacement, le transporteur habilité agit sur la télécommande 35 qu'il détient dans le véhicule pour afficher sur l'écran 23 que le stationnement est autorisé et inactiver l'alarme 31. Quand le véhicule de transport de fonds quitte l'emplacement 2, ce qui est détecté par le détecteur, le stationnement peut rester autorisé si aucun transport de fonds n'est prévu sur le reste de la demi-journée ou peut être à nouveau interdit si un autre transport de fonds est prévu.

Si un véhicule non autorisé vient à stationner sur un ou plusieurs emplacements 2 dans une plage de stationnement non autorisé, le capteur 11 détecte la présence de ce véhicule et agit sur le système de gestion 6, qui active les diodes 21 et l'alarme 31 pour avertir l'automobiliste qu'il est en train de se garer sur un emplacement réservé et la banque qu'un stationnement non autorisé est en train de se faire.

Ainsi qu'il apparaît de ce qui précède, l'invention apporte une amélioration déterminante à la technique antérieure, en fournissant un système qui permet ainsi de réserver efficacement un ou plusieurs emplacements de stationnement à un véhicule autorisé, en particulier un véhicule de transport de fonds devant une banque, sans supprimer la possibilité de stationnement sur l'emplacement par d'autres véhicules en dehors des plages horaires dans lesquels l'emplacement doit être réservé.

Le transport de fonds ou de valeurs est rendu beaucoup plus sûr étant donné que le véhicule de transport peut se garer au plus près de l'entrée de la banque, et ce, sans suppression d'une place de stationnement systématique devant une banque.

Il va de soi que l'invention n'est pas limitée à la forme de réalisation décrite ci-dessus à titre d'exemple mais qu'elle en embrasse au contraire toutes les variantes de réalisation entrant dans le champ de protection défini par les revendications ci-annexées. Ainsi, le système de gestion peut comprendre des moyens logiciels permettant de déterminer de manière aléatoire les heures de début d'une plage horaire de stationnement autorisé, afin que ces heures de début ne soient pas fixes et que les automobilistes ne puissent pas s'habituer à des horaires fixes, qu'ils pourraient anticiper ; le système télécommandes 35/récepteur 24 pourrait être remplacé par un système à clé ; le système de gestion pourrait être placé dans le panneau 5, seul un pupitre de programmation étant alors placé dans la banque 1 ; le capteur peut être magnétique et être sensible à la masse magnétique du véhicule.

## Revendications

1. Système de réservation d'un ou plusieurs emplacements de stationnement pour un véhicule, **caractérisé en ce qu'**il comprend :
- un détecteur de la présence d'un véhicule sur l'emplacement de stationnement (2) à réserver ;
- un panneau indicateur (5) visible par le conducteur d'un véhicule stationnant sur ledit emplacement (2), comprenant un moyen d'affichage d'informations (23) ;
- un système de gestion programmable (6), relié au détecteur et au panneau indicateur (5), grâce auquel des plages horaires de stationnement autorisé et des plages horaires de stationnement non autorisé peuvent être programmées, et grâce auquel des informations correspondantes peuvent être affichées sur ledit panneau indicateur (5) par ledit moyen d'affichage d'informations (23) ;
- des moyens d'alarme (21, 31), reliés au système de gestion (6) et commandés par celui-ci, et
- des moyens (24, 35) d'autorisation, par lequel un utilisateur habilité peut agir sur le système de gestion (6) pour autoriser temporairement le stationnement d'un véhicule autorisé dans une plage horaire non autorisée, permettant, au départ de ce véhicule, de rendre le stationnement autorisé dans une plage horaire jusque là non autorisée aux utilisateurs non habilités.

2. Système selon la revendication 1, **caractérisé en ce que** le système de gestion (6) comprend des moyens logiciels permettant de déterminer de manière aléatoire les heures de début des plages horaires de stationnement autorisé, et de manière fixe les heures de début des plages horaires de stationnement non autorisé.

3. Système selon la revendication 1 ou la revendication 2, **caractérisé en ce que** chaque emplacement de stationnement (2) est délimité par un marquage au sol (10).

4. Système selon la revendication 3, **caractérisé en ce que** le marquage (10) est spécifique afin d'attirer l'attention d'un automobiliste sur le fait qu'il s'agit d'un emplacement particulier, susceptible d'être réservé.

5. Système selon l'une des revendications 1 à 4, **caractérisé en ce que** chaque détecteur inclut un capteur à pression (11) noyé dans le substrat de la chaussée.

6. Système selon l'une des revendications 1 à 5, **caractérisé en ce que** le moyen d'affichage d'informations est un écran électronique (23).

7. Système selon l'une des revendications 1 à 6, **caractérisé en ce que** le système de gestion (6) programmable comprend un ordinateur et un logiciel de gestion.

8. Système selon l'une des revendications 1 à 7, **caractérisé en ce que** les moyens d'alarme comprennent des diodes électroluminescentes (21) entourant un panneau réglementaire (20) de stationnement interdit.

9. Système selon l'une des revendications 1 à 8, **caractérisé en ce que** les moyens d'autorisation comprennent un récepteur (24) d'ondes radio et au moins une télécommande (35) à ondes radio apte à coopérer avec le récepteur (24) pour agir sur le système de gestion (6).

10. Utilisation du système selon l'une des revendications 1 à 9 pour réserver un ou plusieurs emplacements de stationnement à un véhicule de transport de fonds devant une banque.
